# EUROPÄISCHE PATENTSCHRIFT

(11) **EP 1 103 230 B1**
(45) Veröffentlichungstag und Bekanntmachung des Hinweises auf die Patenterteilung: **12.09.2007**
(21) Anmeldenummer: 00122240.5
(22) Anmeldetag: 17.10.2000
(51) Int. Cl.: A61C 5/06, A46B 9/00

(54) **Applikationsvorrichtung**
Application device
Dispositif applicateur

(30) Priorität: 25.11.1999 DE 19956705
(43) Veröffentlichungstag der Anmeldung: 30.05.2001
(73) Patentinhaber: Ivoclar Vivadent AG, 9494 Schaan (LI)
(72) Erfinder: Salz, Ulrich, Dr., 88131 Lindau (DE); Rumhorst, André, Dr., 9490 Vaduz (LI); Gianasmidis, Alexandros, 9435 Heerbrugg (CH); Müller, Frank, 6800 Feldkirch (AT); Rheinberger, Volker, Dr., 9490 Vaduz (LI)
(74) Vertreter: Baronetzky, Klaus

(56) Entgegenhaltungen:
- EP-A- 0 895 943
- EP-A- 0 901 452
- DE-A- 19 722 765
- US-A- 3 951 157
- US-A- 5 150 495

## Beschreibung

Die vorliegende Erfindung betrifft eine Applikationsvorrichtung, gemäß dem Oberbegriff von Anspruch 1, die insbesondere für Dentalzwecke bestimmt ist.

Eine derartige Applikationsvorrichtung ist aus der DE-U1-92 18 949 bekannt. Bei dieser Applikationsvorrichtung ist ein Auftragelement in einem Futteral mit seitlichen Löchern aufgenommen, über die ein Fluid eindringen kann, das der Benetzung des Auftragelements dient.

Mit dieser Lösung soll verhindert werden, daß das Fluid ungehindert austreten kann, wenn die Applikationsvorrichtung beispielsweise umgekippt wird. Hierzu sind Dichtflächen zwischen dem Futteral und dem Applikationselement vorgesehen.

Eine derartige Lösung mag im Bereich kosmetischer Produkte sinnvoll sein. Für den Dentalbereich ist aber eine präzise Beaufschlagung eines Applikationselements wesentlich. Auch wenn bei der DE-U1-92 18 949 relativ kleine Löcher in dem Futteral vorgesehen sind, die gemäß der Beschreibung eine gewisse Schutzwirkung entfalten sollen, ist nicht ausgeschlossen, daß das Fluid unbeabsichtigt eindringt und das Applikationselement bereits vor dem eigentlichen Benutzungsvorgang benetzt.

Zahlreiche weitere Applikationsvorrichtungen sind bekannt geworden. So ist es beispielsweise vorgeschlagen worden, ein Applikationselement in einer Flüssigkeit eingetaucht zu halten, und durch Niederdrücken des Behälters für diese Flüssigkeit nach der Art eines Überlaufs eine weitere Flüssigkeit einströmen zu lassen, um die zu applizierende Mischung bereitzustellen. Diese Lösung bedarf allerdings zweier getrennter Abdichtsysteme, so dass ein nicht unbeachtlicher Aufwand erforderlich ist. Eine Vielzahl von Dichtlinien bedingt allerdings auch eine entsprechend grosse Anfälligkeit und Lagerinstabilität.

Ferner ist es in diesem Zusammenhang auch bekannt geworden, eine Membran zwischen zwei Kammern, die die Flüssigkeiten aufnehmen, durch einen Dorn gezielt zu zerstören, der durch Eindrücken eines Innengehäuses aktivierbar ist. Diese Lösung bedingt allerdings eine besondere Ausgestaltung des Dorns, wenn sicher verhindert werden soll, dass der Dorn mit dem Applikationselement in Kollision gerät.

Die EP-A-0 901 452 beschreibt eine Applikationsvorrichtung, die das Aufbewahren einer Zweikomponenten-Flüssigkeit gestattet, wobei die erste Komponente sich in der unteren Kammer einer äußeren Hülse befindet und die zweite Komponente in einer zweiten Kammer eingelagert ist, die eine innere Hülse aufweist, und in welcher ein Auftragelement angebracht ist.

Auch aus der DE 197 22 765 ist eine Applikationsvorrichtung mit zwei flüssigkeitsgefüllten Kammern bekannt, wobei die eine Kammer ein Applikationselement mit einem Auftragelement aufnimmt. Jedoch muss auch bei dieser Lösung die Flüssigkeiten in der Applikationsvorrichtung gelagert werden.

Es ist ferner bekannt geworden, reaktionsfähige Substanzen, z.B. ein Composit für Zahnfüllungen auf einer mit Peroxid beschichteten Unterlage zu mischen, bzw. das Composit mit einem peroxidbeschichteten Spatel anzumischen. Diese Anmischung hat den Nachteil, dass ein homogenes Vermischen nicht möglich ist, da nicht erkennbar ist, wann das Peroxid durch das ziemlich zähflüssige Compositmaterial völlig verbraucht ist.

Daher liegt der Erfindung die Aufgabe zugrunde, eine Applikationsvorrichtung gemäss dem Oberbegriff von Anspruch 1 zu schaffen, die preisgünstig herzustellen ist und eine gegenüber dem Stand der Technik verbesserte Handhabbarkeit, verbunden mit einer dennoch guten Lagerstabilität, ermöglicht, wobei insbesondere ein homogenes Vermischen von einem Fluid ermöglicht und eine Arbeitserleichterung verbunden mit einer Zeitersparnis erzielt werden soll.

Diese Aufgabe wird erfindungsgemäß durch Anspruch 1 gelöst. vorteilhafte Weiterbildungen ergeben sich aus den Unteransprüchen.

Erfindungsgemäß ist es vorgesehen, dass das Auftragelement, also beispielsweise ein Ende des Applikationselements, vorab mit einer oder mehreren Reaktionssubstanzen ausgestattet ist. Beispielsweise kann ein Doppel-Katalysatorsystem als Salz aufgebracht sein. Das erfindungsgemäße Applikationselement wird dann in eine besondere Flüssigkeit eingetaucht, die unter Bildung eines Tropfens das Auftragelement umgibt.

Das erfindungsgemäße Applikationselement wird dann in eine Flüssigkeit, z.B. in ein dentales Adhäsiv eingetaucht, das unter Bildung eines Tropfens das Auftragelement umgibt. Das Applikationselement wird dann in den Mund des Patienten eingeführt, und das Adhäsiv wird während des eigentlichen Auftragvorgangs in eine Kavität oder auf einer Dentin- oder Schmelzfläche mit den Katalysatoren vermischt. Die in dem Adhäsiv ggf. vorhandenen Katalysatoren reagieren mit den Katalysatoren des Auftragelements, und das Ganze härtet ggf. aus. Es ist auch denkbar, daß auf das Auftragelement nur ein Katalysator aufgebracht wird, der beispielsweise die Viskosität des Adhäsivs vergrößert oder verkleinert.

Erfindungsgemäß besonders günstig ist es, daß das Auftragen des Adhäsivs auf die Auftragsfläche selbst offenbar chemische Reaktionen besonders fördert. Durch die Verteilung des Adhäsivs wird auch das auf dem Auftragelement vorhandene Salz als Reaktionssubstanz gut ausgelöst, damit der Selbsthärtvorgang unterstützt wird. Erfindungsgemäß ist es in diesem Zusammenhang besonders günstig, daß die Applikationsvorrichtung die Notwendigkeit der Lichthärtung des aufgebrachten Adhäsivs entfallen läßt. Damit entfällt ein voller Verfahrensschritt, z.B. beim Einsetzen eines Inlays oder bei der Befestigung einer Krone.

Erfindungsgemäß ist es vorgesehen, daß das Auftragelement aus einem verformbaren Material besteht. Unter "verformbar" ist hier eine Materialhärte zu verstehen, die für das Auftragen geeignet ist. So kann beispielsweise die Applikationsvorrichtung aus Kunststoff bestehen, wobei sich das Applikationselement im wesentlichen in Form eines Stäbchens bis zu einem Arbeitsende erstreckt. Dort ist das erfindungsgemäße Auftragelement vorgesehen, das entweder einstückig, also aus dem gleichen Material wie das Applikationselement im übrigen, oder aus einem anderen Material besteht. Beispielsweise kann ein Gewebe, Pinselhaare, ein Schwamm, Fasern, Kunststoff, Hartpapier oder Holz als Material für das Auftragelement verwendet werden, wobei die Ausbildung eines Mikropinsels bevorzugt ist. Zudem ist es bevorzugt, dass das Material des Auftragelements deutlich weicher als Dentin und Zahnschmelz ist, um beim Auftragen keine Beschädigungen des Zahns befürchten zu lassen.

wichtig ist die Realisierung der Viskosität der Flüssigkeit im Bereich von 10 bis 500.000 mPa, insbesondere von 1.000 bis 100.000 mPa und bevorzugt von 10.000 bis 50.000 mPa beträgt, wobei die geringe Viskosität sicherstellt, dass die Reaktionssubstanz vollständig aus dem Auftragselement gelöst wird, wie im Zusammenhang mit der Erfindung durchgeführte Versuche ergeben haben. Offenbar erzeugen die Pinselhärchen eines in vorteilhafter Ausgestaltung der Erfindung verwendeten Mikropinsels Kapillarwirkungen, so dass die Flüssigkeit bei entsprechend ausgelegter Viskosität an den Härchen entlangkriechen und umgehend die Reaktionssubstanz auslösen kann. Zudem ermöglicht sie als flüssiges Adhäsiv ein flächiges Ausbreiten auf der Auftragsfläche, wozu die recht geringe Oberflächenspannung der Flüssigkeit beiträgt.

Erfindungsgemäß ist das Auftragelement selbst mit der Reaktionssubstanz ausgestattet, die durch die Flüssigkeit aktivierbar ist. Durch Einschieben in ein Gehäuse, das die Flüssigkeit aufweist, oder durch Eintauchen in ein sonstiges geeignetes Behältnis kann die Reaktion aktiviert werden.

Damit ist bei Verwendung eines Gehäuses lediglich eine umlaufende Dichtung der Dichtvorrichtung erforderlich, um die Lagerstabilität aufrechtzuerhalten. Das erfindungsgemäße Auftragelement ist bevorzugt mit einem oder mehreren Katalysatoren ausgestattet. Hierzu wird er in eine Benzolsulphinsäurelösung und/oder eine Amin-Lösung, beispielsweise Diethanol-p-Toluidin eingetaucht und trocknen gelassen. Die Reaktionssubstanz liegt dann bei der Aufbewahrung als Trockensubstanz vor und ist damit besonders stabil. Als Reaktionssubstanz kann daher auch eine Doppelbeschichtung durch zwei Katalysatoren aufgetragen werden, so dass mit der Aktivierung durch Einschieben der Dichtvorrichtung und Überwindung der Dichtfunktion durch das Fluid praktisch drei Komponenten zusammengebracht werden und entsprechend reagieren, wobei das Fluid als Adhäsiv für die Haftung von Compositmaterialien auf Zahnschmelz oder Dentin eingesetzt wird.

In dieser Ausführungsform kann die erfindungsgemäße Applikationsvorrichtung als Single-Dose-Einheit bereitgestellt werden. Es ist in anderen Ausführungsformen jedoch auch möglich, das Applikationselement separat z.B. als Einzelpinsel oder als Pinselkamm vorzufertigen und zu verpacken und es zum Gebrauch in das Fluid einzutauchen. Die Single-Dose-Einheit oder die Einzel- bzw. Mehrfachpinsel (Pinselkamm) werden vorzugsweise in Folien z.B. aus Aluminium oder beschichtetem Kunststoff eingesiegelt, um die Lagerstabilität zu verbessern. Wenn beispielsweise grössere Fissuren versiegelt oder Zahnlacke aufgetragen werden, kann auf diese Weise eine ausreichende Materialmenge bereitgestellt werden.

Erfindungsgemäß liegt die Reaktionssubstanz in fester oder halbfester Form vor. Es ist in einer Ausfuhrungsform, die nicht Teil der Erfindung ist, auch möglich, sie in flüssiger Form als Tropfen aufzubewahren. Je nach Art des Fluids kann sowohl ein lichthärtendes als auch ein selbsthärtendes Adhäsiv bereitgestellt werden.

Erfindungsgemäß besonders günstig ist es, dass recht breite Schlitze für die Zufuhr des Fluids zum Auftragelement bereitgestellt werden. Beim kräftigen Eindrücken des Applikationselements, also der Dichtung, in das Gehäuse, wird das Fluid unter starken Verwirbelungen durch den Spalt zwischen dem Boden der Dichtvorrichtung und der Innenseite des Gehäuses nach oben gedrückt und strömt mit recht hoher Strömungsgeschwindigkeit in den mikrobehaarten Bereich ein. Hierdurch entsteht eine intensive Vermischung, so dass die chemische Reaktion durch den oder die Katalysatoren recht schnell in Gang gesetzt wird und das fertige Adhäsiv umgehend für die Anwendung bereit ist. Die erforderliche Reaktionszeit kann beispielsweise eine Sekunde betragen; eine derart kurze Zeitspanne wird in der Regel ohnehin nicht unterschritten.

Insofern lässt sich mit überraschend einfachen Massnahmen eine einerseits gut langzeitstabile, andererseits rasch einsetzbare Applikationsvorrichtung bereitstellen.

Günstig ist es insofern, dass mit dem Applikationselement selbst die Dichtvorrichtung niederdrückbar ist. Dies lässt sich entweder mit der stumpfen Spitze des Auftragelements realisieren oder mit einem entsprechenden Vorsprung im Verlauf des Schafts des Applikationselements.

Erfindungsgemäß besonders günstig ist es, wenn das Auftragelement als Mikropinsel ausgebildet ist. Ein derartiger Mikropinsel lässt sich durch Beflockung der Spitze des Schafts des Applikationselements herstellen. Unter Auftragelement wird erfindungsgemäß jede Art von durch Applikation einer aufnahmefähigen Substanz auf die Schaftspitze hergestellte Auftragvorrichtung verstanden, so dass auch nicht ausgeschlossen ist, dass eine eher schwammförmige Struktur vorgesehen ist.

Das Aufnahmevermögen des Mikropinsels für das Fluid läßt sich je nach Härchenlänge, also Art der Beflockung, oder durch andere geeignete Maßnahmen an das erwünschte Auftragsvolumen anpassen. So kann es für die Benetzung von größeren Zahnflächen, die entsprechend mehr Haftvermittler erfordern sinnvoll sein, einen Mikropinsel mit einer größeren Tropfenaufnahmekapazität für das Fluid vorzusehen, bei dem sich die Pinselhärchen bis zu seitlichen Streben der Dichtvorrichtung erstrecken.

Erfindungsgemäß ist es besonders günstig, daß ein derartiges Applikationselement in einer besonders günstigen Weise abbiegbar sein kann. Hierzu ist im Verlauf des Schafts des Applikationselements eine Verjüngung vorgesehen, die eine plastische Verformung des Applikationselements in einer solchen Weise erlaubt, daß es nach Entnahme aus dem Gehäuse abgebogen werden kann.

In besonders günstiger Weise kann das Abbiegen so erfolgen, daß das Applikationselement zunächst um wenige Millimeter aus dem Gehäuse herausgezogen und dann abgebogen wird. Der Mikropinsel ist in diesem Zustand noch von dem Gehäuse geschützt, so daß kein gesondertes zusätzliches Biegewerkzeug erforderlich ist.

Erfindungsgemäß ist es besonders günstig, wenn die Verjüngung knapp unterhalb einer Verdickung angeordnet ist, deren vordere Anschlagschulter zugleich auch dem Einschieben der Dichtvorrichtung dient. Die Verdickung bildet dann zugleich den Übergang zwischen Griff und Schaft und bietet dem Zahnarzt eine ergonomisch günstige Handhabungssicherheit, die verhindert, daß er versehentlich bei dem Führen des Applikationselements den Spitzenbereich des Applikationselements, der die Reaktionssubstanz trägt, berührt.

In vorteilhafter Ausgestaltung ist es ferner vorgesehen, daß der Griff der Verdickung benachbart mit Rillen oder anderen geeigneten Oberflächenausgestaltungen versehen ist, die den Griff greiffreundlicher gestalten.

Die erfindungsgemäße Applikationsvorrichtung läßt sich als Single-Dose-Einheit ausgesprochen preisgünstig herstellen, wobei der Mikropinsel bevorzugt aus Polypropylen hergestellt ist.

Die erfindungsgemäße Dichtvorrichtung erfüllt in besonders günstiger Weise mehrere Funktionen. Zum einen dichtet sie mit ihrem Boden vor dem Einsatz der Applikationsvorrichtung gegen einen Innen-Ringwulst des Gehäuses sicher ab. Sie besteht bevorzugt aus einem Kunststoff, der etwas weicher als das Material des Gehäuses ist. Zugleich dient sie der Führung des Schafts des Applikationselements, wobei es bevorzugt ist, daß die Reibung zwischen dem Schaft und der Dichtvorrichtung einerseits und zwischen der Dichtvorrichtung und dem Gehäuse andererseits auch im Bereich des oberen Abflußrings so groß ist, daß die Teile der erfindungsgemäßen Applikationsvorrichtung nicht versehentlich auseinanderfallen.

Es versteht sich, daß die erfindungsgemäße Applikationsvorrichtung vor der Anwendung in einer geeigneten, bevorzugt luftdichten Verpackungsvorrichtung aufgenommen ist, so daß auch die Reaktionssubstanz keinen Umwelteinflüssen durch den schmalen Spalt, den Ring der Dichtungsvorrichtung und dem Schaft unterworfen ist.

Weitere Vorteile, Einzelheiten und Merkmale ergeben sich aus der nachfolgenden Beschreibung zweier Ausführungsbeispiele anhand der Zeichnung.

Es zeigen:
- Fig. 1: einen Schnitt durch eine Ausgestaltung einer erfindungsgemäßen Applikationsvorrichtung; und
- Fig. 2: eine Schnittansicht einer weiteren Ausführungsform einer erfindungsgemäßen Applikationsvorrichtung.

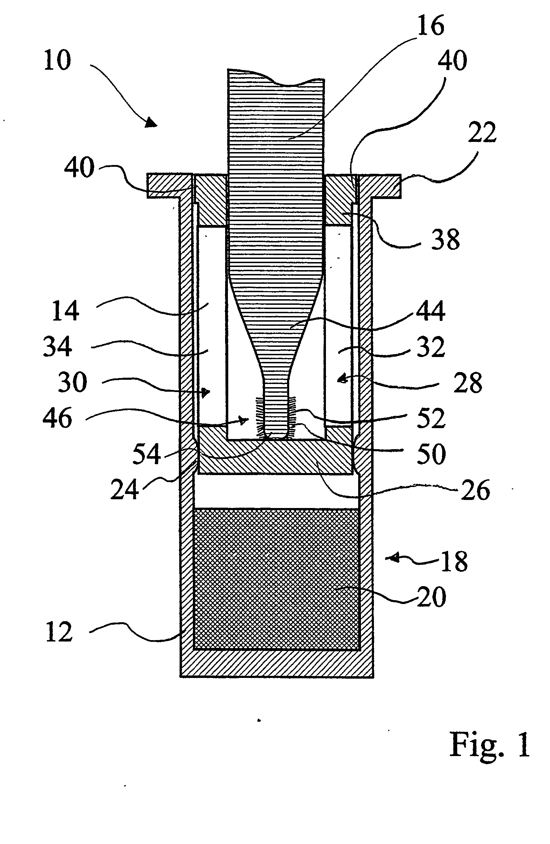

Die in Fig. 1 dargestellte Applikationsvorrichtung 10 weist ein Gehäuse 12 auf, in dem eine im wesentlichen becherförmige Dichtvorrichtung 14 geführt ist, die ihrerseits ein Applikationselement 16 aufnimmt.

Das Gehäuse 12 weist in seinem unteren Bereich eine vorrichtung 18 für ein Fluid 20 auf. Das Gehäuse 12 ist ebenfalls im wesentlichen becherförmig und weist an seinem oberen Ende einen Verstärkungsrand 22 auf, der als nach außen gewandter Kragen ausgebildet ist.

Etwas unterhalb der Mitte seiner Höhe ist ein nach innen gewandter Wulst 24 vorgesehen, der im wesentlichen konvex ausgebildet ist und der Abdichtung gegen einen Boden 26 der Dichtvorrichtung 14 dient.

Hierzu weist der Boden 26 der Dichtvorrichtung 14 ein leichtes Übermaß gegenüber dem Innendurchmesser des Wulstes 24 auf. In einer besonders günstigen Ausgestaltung ist der Boden 26 an seinem Außenumfang zudem leicht konkav, so daß sich eine gewisse Rastfunktion für die Fixierung der Dichtvorrichtung 14 nach oben und nach unten ergibt.

Die Dichtvorrichtung weist oberhalb des Bodens 26 seitlich zwei ziemlich große Ausnehmungen 28 und 30 auf, die sich nahezu über ihre gesamte Höhe erstrecken. Diese Ausnehmungen sind von dem Fluid 20 bei eingedrückter Dichtvorrichtung 14 leicht und schnell durchströmbar.

Ferner weist die Dichtvorrichtung die Ausnehmungen 28 und 30 begrenzend zwei Streben 32 und 34 auf, die den scheibenförmigen Boden 26 der Dichtvorrichtung mit einem Ring 38 verbinden, der sich kreisringförmig dem Ringspalt zwischen dem Applikationselement 16 und dem oberen Ende des Gehäuses 12 erstreckt.

Der Abschlußring 38 weist einen nach außen gewandten Führungsvorsprung 40 auf, dessen Außendurchmesser im Wesentlichen dem Innendurchmesser des Gehäuses 12 entspricht und etwas geringer als, der Innendurchmesser des Gehäuses im Bereich des Wulstes 24 ist. Durch diese Ausgestaltung ist die Dichtvorrichtung in dem Gehäuse axial beweglich geführt, wobei zur Überwindung der Dichtfunktion der Dichtvorrichtung am Boden 26 eine gewisse Kraft aufgebracht werden muß.

Diese Kraft läßt sich erfindungsgemäß über das Applikationselement 16 aufbringen. Das Applikationselement weist einen hier nicht näher dargestellten Bereich eines Griffs 42 auf. Der Griff 42 geht in einem Verjüngungsbereich in einen Schaft 44 über, der in einen mikrobehaarten Bereich 46 ausläuft. Dieser Bereich bildet das erfindungsgemäße Auftragelement 50, welches hier durch einen Mikropinsel dargestellt ist. Der Mikropinsel 50 ist in dem dargestellten Ausführungsbeispiel durch eine Beflockung gebildet, so daß sich zahlreiche wirr angeordnete Pinselhaare 52 nach außen erstrecken.

Der mikrobehaarte Bereich 46 endet in einer eher stumpfen Spitze 54. Diese ermöglicht die Kraftübertragung auf den Boden 26 der Dichtvorrichtung und damit das Einschieben der Dichtvorrichtung 14 zur Aktivierung der Applikationsvorrichtung 10.

In dem dargestellten Ausführungsbeispiel gemäß Fig. 1 sind die Pinselhaare 52 eher kurz. Die Haarlänge beeinflußt das Aufnahmevermögen sowohl für die Reaktionssubstanz, die dort als abgelagertes Salz aufgebracht ist, als auch für das Fluid 20. Diese Ausführungsform ist geeignet, wenn besonders kleine Mengen an Adhäsiv aufgetragen werden sollen.

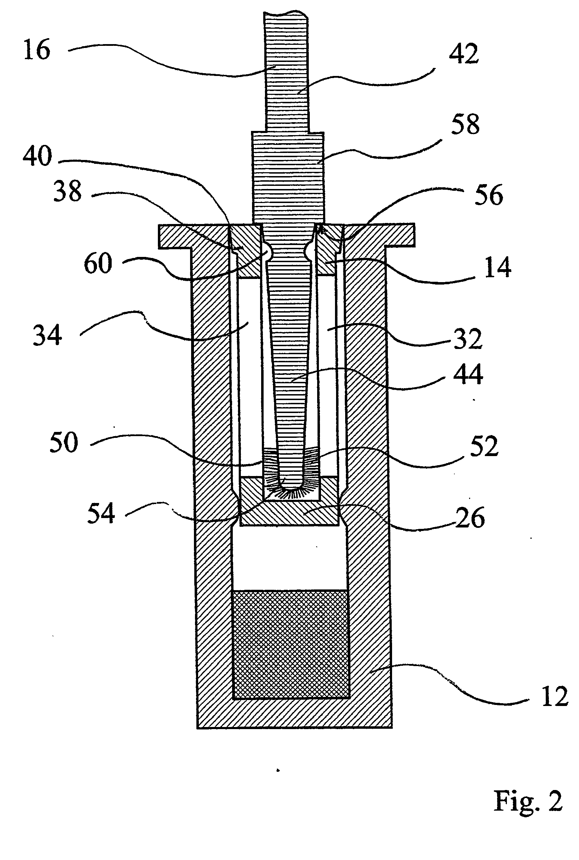

Aus Fig. 2 ist eine modifizierte Ausgestaltung der erfindungsgemäßen Applikationsvorrichtung ersichtlich. Gleiche Bezugszeichen weisen hier auf gleiche Teile hin und bedürfen keiner weiteren Erläuterung. Im Unterschied zu der Ausführungsform gemäß Fig. 1 ist der Schaft 44 des Applikationselements 16 bei dieser Ausführungsform konisch ausgebildet. Die Pinselhaare 52 sind länger und reichen bis an die Streben 32, 34 heran. Zudem erfolgt das Eindrücken der Dichtvorrichtung 14 nicht über die Spitze 54 des Applikationselements 16, sondern über eine Anschlagschulter 56, die an einer Verdickung 58 ausgebildet ist, die in dieser Ausführungsform den Griff 42 vom Schaft 44 trennt und für die Anlage oben auf dem Ring 38 bestimmt ist.

Etwas unterhalb der Anschlagschulter 56 ist in diesem Ausführungsbeispiel eine Verjüngung oder Kerbe 60 vorgesehen, die die Möglichkeit bietet, den Schaft 44 gegenüber dem Griff 42 abzubiegen. Aufgrund der Konfiguration des Applikations elements 16 ist eine plastische Verformung möglich, wobei Versuche ergeben haben, daß der Schaft 44 gegenüber dem Griff 42 aus der abgebogenen Stellung lediglich etwas zurückfedert.

Der Abstand zwischen der Oberseite des Bodens 26 und der Oberseite des Rings 38 ist etwas größer als der Abstand zwischen der Spitze 54 und der Anschlagschulter 56. Damit ist sichergestellt, daß der Mikropinsel 50 vollständig in der im wesentlichen becherförmigen Dichtvorrichtung aufgenommen sein kann, ohne daß die Pinselhaare 52 am Boden 26 abgeknickt würden.

Bei dieser Ausführungsform ist das Gehäuse 12 relativ stabil, so daß auch eine eher rauhe Behandlung möglich ist. Demgegenüber ist der Kunststoff der Dichtvorrichtung 14 wesentlich weicher, so daß die Dichtfunktion sichergestellt wird. Auch ist bei dieser Ausführungsform der Vorsprung 40 etwas konisch ausgebildet, so daß sich eine gewisse Dichtfunktion gegenüber dem Gehäuse ergibt und auch die Reaktionssubstanz auf dem Mikropinsel 50 abdichtend aufbewahrt ist.

In einer weiteren modifizierten Ausgestaltung ist es vorgesehen, daß der Ring 38 einen nach innen gewandten Wulst aufweist, der in die Verjüngung 60 etwas eingreift. Durch diese Ausgestaltung läßt sich das Applikationselement 16 sicher in der Dichtvorrichtung lagern.

Nachfolgend werden die Verfahrensschritte aufgeführt, die für die konventionelle adhäsive restaurative Zahnheilkunde erforderlich sind. Für die direkte Restauration mit einem Composit-Füllmaterial sind die folgenden Schritte erforderlich:
1. Karies entfernen
2. Reinen, trocknen, ggf. Unterfüllung legen
3. Dentin und Schmelz ätzen
4. Syntac Single-Component mit einem Pinsel auftragen
5. 20 Sek. warten
6. Mit Luft verblasen
7. 20 Sek. Lichtpolymerisation
8. Eine zweite Schicht auftragen wie oben
9. Applikation des Composites und Lichthärtung

Mit der erfindungsgemäßen Applikationsvorrichtung und dem erfindungsgemäßen Verfahren können mindestens die Schritte 5 bis 7, je nach Anwendungsfall auch der Schritt 8, entfallen, so daß das Applikationsverfahren beschleunigt und vereinfacht wird, was auch der Fehlersicherheit zugute kommt, nachdem jeder separate Verfahrensschritt für ein gutes Restaurationsergebnis mit der gebotenen Sorgfalt ausgeführt werden muß.

## Patentansprüche

1. Applikationsvorrichtung, insbesondere für Dentalzwecke, mit einer Dichtvorrichtung (14), welche ein Applikationselement (16) mit einem Auftragelement (50) aufweist, wobei auf dem Auftragelement (50) mindestens eine Reaktionssubstanz vorliegt und von welcher Reaktionssubstanz ein eine geringe Viskosität aufweisendes Fluid (20) durch Einschieben der Dichtvorrichtung (14) und Überwindung der Dichtfunktion der Dichtvorrichtung (14) aktivierbar ist,
**dadurch gekennzeichnet, dass** die Reaktionssubstanz, welche auf das Auftragelement (50) vorab aufgebracht ist, in fester oder halbfester Form auf dem Auftragelement (50) vorliegt.

2. Applikationsvorrichtung nach Anspruch 1,
**dadurch gekennzeichnet, dass** das Auftragelement (50) aus einem, insbesondere elastisch, verformbaren Material besteht.

3. Applikationsvorrichtung nach Anspruch 1,
**dadurch gekennzeichnet, dass** eine vollständige Lösung der Reaktionssubstanz aus dem Auftragelement (50) bei einer Viskosität des Fluids zwischen 10 und 500.000 mPa, insbesondere zwischen 1.000 und 100.000 mPa und bevorzugt zwischen 10.000 und 50.000 mPa, realisierbar ist.

4. Applikationsvorrichtung nach einem der vorhergehenden Ansprüche,
**dadurch gekennzeichnet, dass** das Material des Auftragelements (50) eine Aufnahmekapazität für das Fluid (20) aufweist, und insbesondere aus einem gegenüber Zahnschmelz und/oder Dentin weicheren Material besteht.

5. Applikationsvorrichtung nach einem der vorhergehenden Ansprüche,
**dadurch gekennzeichnet, dass** die Reaktionssubstanz mindestens ein Katalysator ist, der in fester oder halbfester Form auf dem Auftragelement (50) aufgebracht ist.

6. Applikationsvorrichtung nach einem der vorhergehenden Ansprüche,
**dadurch gekennzeichnet, dass** die Reaktionssubstanz mindestens ein Katalysator ist, der als Salz auf dem Auftragelement (50) angebracht ist.

7. Applikationsvorrichtung nach einem der vorhergehenden Ansprüche,
**dadurch gekennzeichnet, dass** die Applikationsvorrichtung ein Gehäuse (12) aufweist, welches in seinem unteren Bereich eine Aufnahmevorrichtung (18) für das Fluid (20) aufweist, wobei das Auftragelement (50) durch Einschieben in die Aufnahmevorrichtung (18) für das Fluid (20) aktivierbar ist.

8. Applikationsvorrichtung nach einem der vorhergehenden Ansprüche,
**dadurch gekennzeichnet, dass** das Auftragelement (50) durch Eintauchen in ein Fluid (20) aktivierbar ist.

9. Applikationsvorrichtung nach Anspruch 7,
**dadurch gekennzeichnet, dass** die Aufnahmevorrichtung (18) für die Flüssigkeit (20) in dem Gehäuse (12) vorgesehen ist, das einen Mikropinsel (50) und mindestens einen Teil eines Schafts (44), in welchen einen Griff (42) des Applikationselements (16) übergeht, aufnimmt.

10. Applikationsvorrichtung nach Anspruch 7 oder 9,
**dadurch gekennzeichnet, dass** die Dichtvorrichtung (14) in dem Gehäuse (12) geführt ist und in einer Lagerstellung die Aufnahmevorrichtung (18) für die Flüssigkeit (20) abdichtet.

11. Applikationsvorrichtung nach Anspruch 10,
**dadurch gekennzeichnet, dass** die Dichtvorrichtung (14) von dem Auftragelement (50) das als Mikropinsel ausgebildet ist, (50) bewegbar und insbesondere unter Überwindung ihrer Dichtfunktion in das Gehäuse (12) eindrückbar ist.

12. Applikationsvorrichtung nach einem der Ansprüche 10 oder 11,
**dadurch gekennzeichnet, dass** die Dichtfunktion der Dichtvorrichtung (14) zwischen einem vorspringenden Wulst (24) an der Innenseite des Gehäuses (12) und der Außenseite der Dichtvorrichtung (14) gebildet ist.

13. Applikationsvorrichtung nach einem der Ansprüche 10 bis 12,
**dadurch gekennzeichnet, dass** die Dichtvorrichtung (14) mindestens eine seitliche Ausnehmung (28, 30) aufweist, über welche das Auftragelement (50) nach ihrem Eindrücken von dem Fluid (20) benetzbar ist.

14. Applikationsvorrichtung nach einem der Ansprüche 10 bis 13,
**dadurch gekennzeichnet, dass** das Auftragelement (50) eine stumpfe Spitze (54) aufweist, über welche die im wesentlichen becherförmige Dichtvorrichtung (14) durch Anlage an dem Becherboden (26) eindrückbar ist.

15. Applikationsvorrichtung nach einem der vorhergehenden Ansprüche,
**dadurch gekennzeichnet, dass** das Auftragelement als Mikropinsel (50) ausgebildet ist, dessen stumpfe Pinselspitze (54) mit Pinselhaaren (52) beflockt ist, die durch den Druck zwischen dem Becherboden (26) und dem Mikropinsel (50) flachgedrückt sind und sich beim Ausziehen des Mikropinsels (50) aus der Dichtvorrichtung (14) selbsttätig aufrichten.

16. Applikationsvorrichtung nach einem der Ansprüche 10 bis 15,
**dadurch gekennzeichnet, dass** die Dichtvorrichtung (14) an ihrem oberen Ende einen Führungsvorsprung (40) aufweist, der sich ringförmig erstreckt und dessen Außendurchmesser im wesentlichen dem Innendurchmesser des Gehäuses (12) entspricht.

17. Applikationsvorrichtung nach einem der Ansprüche 10 bis 16,
**dadurch gekennzeichnet, dass** das Auftragelement (50) in der Dichtvorrichtung (14) seitlich geführt ist, und der Durchmesser des Schafts (44) an den Innendurchmesser der becherförmigen Dichtvorrichtung (14) angepasst ist.

18. Applikationsvorrichtung nach einem der Ansprüche 7 bis 17,
**dadurch gekennzeichnet, dass** das Gehäuse (12) die Applikationsvorrichtung (10) nach der Art einer Single-Dose-Einheit aufnimmt.

19. Applikationsvorrichtung nach einem der Ansprüche 10 bis 18,
**dadurch gekennzeichnet, dass** die Dichtvorrichtung (14) einen scheibenförmigen Boden (26) und an ihrem gegenüberliegenden Ende einen Ring (38) aufweist, die mit mindestens zwei, insbesondere mit genau zwei, Streben (32, 34) miteinander verbunden sind.

20. Applikationsvorrichtung nach einem der Ansprüche 10 bis 19,
**dadurch gekennzeichnet, dass** das Auftragelement (50) im Wesentlichen eine Fläche bedeckt, die der Innenfläche der Dichtvorrichtung (14) entspricht.

21. Applikationsvorrichtung nach einem der vorhergehenden Ansprüche,
**dadurch gekennzeichnet, dass** das Auftragelement (50) als weicher Mikroschwamm ausgebildet ist.

22. Applikationsvorrichtung nach einem der vorhergehenden Ansprüche,
**dadurch gekennzeichnet, dass** das Applikationselement (16) über den Verlauf seines Schafts eine Kerbe (60) aufweist, über welche der Schaft (44) des Applikationselements (16) abbiegbar ist.

23. Applikationsvorrichtung nach einem der vorhergehenden Ansprüche,
**dadurch gekennzeichnet, dass** zwischen Schaft (44) und Griff (42) des Applikationselements (16) eine Verdickung (58) ausgebildet ist, deren Durchmesser größer als der Innendurchmesser des Rings (38) ist.

24. Applikationsvorrichtung nach Anspruch 23,
**dadurch gekennzeichnet, dass** die Länge des Applikationselements (16) zwischen der Verdickung (58) und dem Auftragelement (50) im Wesentlichen der Länge der Dichtvorrichtung (14) zwischen dem oberen Ende des Rings (38) und der Oberseite des Bodens (26) entspricht und insbesondere etwa größer als die betreffende Länge des Applikationselements (16) ist.

25. Applikationsvorrichtung nach einem der Ansprüche 10 bis 24,
**dadurch gekennzeichnet, dass** das Applikationselement (16) in der Dichtvorrichtung (14) zusammengedrückt aufgenommen ist und dass insbesondere Pinselhaare (52) des Mikropinsels (50) bis zu Streben (32, 34) der Dichtvorrichtung (14) reichen.

26. Verfahren zur Anfertigung einer Substanz zum Applizieren auf eine dentale Fläche, wobei die Substanz in einer einem Auftragelement (50) aufweisenden Applikationsvorrichtung vorgefertigt wird, und wobei das Auftragelement ein Griffende und ein Arbeitsende aufweist,
**dadurch gekennzeichnet, dass** das Auftragelement (50) an einem Auftragende aus einem verformbaren Material besteht, auf welchem mindestens eine Reaktionssubstanz vorab aufgebracht wird,
- wobei die Reaktionssubstanz in fester oder halbfester Form auf dem Auftragelement (50) vorliegt,
- wobei das Auftragende in einer Dichtungsvorrichtung (14) der Applikationsvorrichtung eingebracht wird, und
- wobei das Auftragende des Auftragelements (50) in einen in einer Aufnahmevorrichtung (18) der Applikationsvorrichtung befindlichen Fluid eingetaucht wird, welches unter Bildung eines Tropfens das Auftragende umgibt, wobei die Reaktionssubstanz durch das Fluid, welches eine geringe Viskosität aufweist, aktiviert wird und wobei die auf dem Auftragende des Auftragelementes derart aufgebrachte Substanz auf eine Dentalfläche aufbringbar ist.

## Claims

1. An applicator device, in particular for dental purposes, with a sealing device (14), which has an applicator element (16) with an applying element (50), wherein at least one reaction substance is present on the applying element (50) and by which reaction substance a fluid (20) having a low viscosity can be activated by pressing in the sealing device (14) and overcoming the sealing function of the sealing device (14),
**characterised in that** the reaction substance, which is firstly applied to the applying element (50), is present in a solid or semi-solid form on the applying element (50).

2. An applicator device according to Claim 1,
**characterised in that** the applying element (50) consists of an, in particular, elastically deformable material.

3. An applicator device according to Claim 1,
**characterised in that** a complete solution of the reaction substance can be obtained from the applying element (50) with a viscosity of the fluid between 10 and 500,000 mPa, in particular between 1,000 and 100,000 mPa and preferably between 10,000 and 50,000 mPa.

4. An applicator device according to any one of the preceding Claims, **characterised in that** the material of the applying element (50) has an absorption capacity for the fluid (20) and, in particular, consists of a material which is softer than dental enamel and/or dentine.

5. An applicator device according to any one of the preceding Claims, **characterised in that** the reaction substance is at least one catalyst which is applied to the applying element (50) in a solid or semi-solid form.

6. An applicator device according to any one of the preceding Claims, **characterised in that** the reaction substance is at least one catalyst which is applied to the applying element (50) as a salt.

7. An applicator device according to any one of the preceding Claims, **characterised in that** the applicator device has a housing (12) which in its lower zone has a receptacle (18) for the fluid (20), wherein the applying element (50) can be activated by pushing in the receptacle (18) for the fluid (20).

8. An applicator device according to any one of the preceding Claims, **characterised in that** the applying element (50) can be activated by being immersed in a fluid (20).

9. An applicator device according to Claim 7,
**characterised in that** the receptacle (18) for the fluid (20) is provided in the housing (12) which accommodates a microbrush (50) and at least one part of a shaft (44) into which merges a handle (42) of the applicator element (16).

10. An applicator device according to Claim 7 or 9,
**characterised in that** the sealing device (14) is guided in the housing (12) and in a storage position seals the receptacle (18) for the fluid (20).

11. An applicator device according to Claim 10,
**characterised in that** the sealing device (14) can be moved by the applying element (50) which is in the form of a microbrush and, in particular while overcoming its sealing function, can be pressed into the housing (12).

12. An applicator device according to either Claim 10 or Claim 11, **characterised in that** the sealing function of the sealing device (14) is formed between a projecting bead (24) on the inside of the housing (12) and the outside of the sealing device (14).

13. An applicator device according to any one of Claims 10 to 12, **characterised in that** the sealing device (14) has at least one lateral recess (28,30) via which the applying element (50) can be wetted with the fluid (20) after it has be pressed in.

14. An applicator device according to any one of Claims 10 to 13, **characterised in that** the applying element (50) has a blunt tip (54) via which the substantially cup-shaped sealing device (14) can be pressed in by being applied against the cup base (26).

15. An applicator device according to any one of the preceding Claims, **characterised in that** the applying element is in the form of a microbrush (50) whose blunt brush tip (54) is flocked with brush hairs (52) which are pressed flat by the pressure between the cup base (26) and the microbrush (50) and automatically become erect when the microbrush (50) is withdrawn from the sealing device (14).

16. An applicator device according to any one of Claims 10 to 15, **characterised in that** at its upper end the sealing device (14) has a guide projection (40) which extends annularly and the outer diameter of which corresponds substantially to the inner diameter of the housing (12).

17. An applicator device according to any one of Claims 10 to 16, **characterised in that** the applying element (50) is guided laterally in the sealing device (14) and the diameter of the shaft (44) is adapted to the inner diameter of the cup-shaped sealing device (14).

18. An applicator device according to any one of Claims 7 to 17, **characterised in that** the housing (12) accommodates the applicator device (10) in the manner of a single-dose unit.

19. An applicator device according to any one of Claims 10 to 18, **characterised in that** the sealing device (14) has a disc-shaped base (26) and at its opposite end has a ring (38), which are connected to one another with at least two, in particular exactly two, struts (32,34).

20. An applicator device according to any one of Claims 10 to 19, **characterised in that** the applying element (50) covers substantially a surface which corresponds to the inner surface of the sealing device (14).

21. An applicator device according to any one of the preceding Claims, **characterised in that** the applying element (50) is in the form of soft microsponge.

22. An applicator device according to any one of the preceding Claims, **characterised in that** over the course of its shaft the applicator element (16) has a notch (60) via which the shaft (44) of the applicator element (16) can be bent.

23. An applicator device according to any one of the preceding Claims, **characterised in that** between the shaft (44) and the handle (42) of the applicator element (16) a thickened portion (58)is formed, the diameter of which is larger than the inner diameter of the ring (38).

24. An applicator device according to Claim 23,
**characterised in that** the length of the applicator element (16) between the thickened portion (58) and the applying element (50) corresponds substantially to the length of the sealing device (14) between the upper end of the ring (38) and the upper side of the base (26) and, in particular, is approximately larger than the respective length of the applicator element (16).

25. An applicator device according to any one of Claims 10 to 24, **characterised in that** the applicator element (16) is accommodated in the sealing device (14) in compressed form, and **in that** in particular brush hairs (52) of the microbrush (50) extend up to struts (32,34) of the sealing device (14).

26. A method of preparing a substance for application to a dental surface, wherein the substance is prepared in an applicator device having an applying element (50) and wherein the applying element has a handle end and an operative end,
**characterised in that** at an applying end the applying element (50) consists of a deformable material on which at least one reaction substance is firstly applied,
- wherein the reaction substance is present in a solid or semisolid form on the applying element (50),
- wherein the applying end is introduced into a sealing device (14) of the applicator device, and
- wherein the applying end of the applying element (50) is immersed in a fluid which is situated in a receptacle (18) of the applicator device and which in forming a drop surrounds the applying end, wherein the reaction substance is activated by the fluid which has a low viscosity, and wherein the substance applied in this way to the applying end of the applying element can be applied to a dental surface.

## Revendications

1. Dispositif applicateur, en particulier à des fins dentaires, comportant un dispositif d'étanchéité (14) qui présente un élément applicateur (16) avec un élément d'application (50), dans lequel au moins une substance réactive se trouve sur l'élément d'application (50) et par laquelle substance réactive un fluide (20) présentant une faible viscosité peut être activé en insérant le dispositif d'étanchéité (14) et en surmontant la fonction d'étanchéité du dispositif d'étanchéité (14),
**caractérisé en ce que** la substance réactive, qui est appliquée en amont sur l'élément d'application (50) se trouve sous forme solide ou semi-solide sur l'élément d'application (50).

2. Dispositif applicateur selon la revendication 1,
**caractérisé en ce que** l'élément d'application (50) est constitué d'un matériau déformable, en particulier de manière élastique.

3. Dispositif applicateur selon la revendication 1,
**caractérisé en ce qu'**une solution complète de la substance réactive de l'élément d'application (50) peut être réalisée à une viscosité de fluide comprise entre 10 et 500 000 mPa, en particulier entre 1000 et 100 000 mPa et de préférence entre 10 000 et 50 000 mPa.

4. Dispositif applicateur selon l'une quelconque des revendications précédentes,
**caractérisé en ce que** le matériau de l'élément d'application (50) présente une capacité d'absorption pour le fluide (20) et se compose en particulier d'un matériau plus mou que l'émail dentaire et/ou la dentine.

5. Dispositif applicateur selon l'une quelconque des revendications précédentes,
**caractérisé en ce que** la substance réactive est au moins un catalyseur, qui est appliqué sur l'élément d'application (50) sous forme solide ou semi-solide.

6. Dispositif applicateur selon l'une quelconque des revendications précédentes,
**caractérisé en ce que** la substance réactive est au moins un catalyseur, qui est appliqué comme sel sur l'élément d'application (50).

7. Dispositif applicateur selon l'une quelconque des revendications précédentes,
**caractérisé en ce que** le dispositif applicateur présente un boîtier (12), qui présente dans sa zone inférieure un dispositif de réception (18) pour le fluide (20), dans lequel l'élément d'application (50) peut être activé par insertion dans le dispositif de réception (18) pour le fluide (20).

8. Dispositif applicateur selon l'une quelconque des revendications précédentes,
**caractérisé en ce que** l'élément d'application (50) peut être activé par immersion dans un fluide (20).

9. Dispositif applicateur selon la revendication 7,
**caractérisé en ce que** le dispositif de réception (18) pour le liquide (20) est prévu dans le boîtier (12), qui reçoit une microbrosse (50) et au moins une partie d'une tige (44), dans laquelle se transforme une poignée (42) de l'élément applicateur (16).

10. Dispositif applicateur selon la revendication 7 ou 9,
**caractérisé en ce que** le dispositif d'étanchéité (14) est guidé dans le boîtier (12) et étanche le dispositif de réception (18) pour le liquide (20) dans une position de stockage.

11. Dispositif applicateur selon la revendication 10,
**caractérisé en ce que** le dispositif d'étanchéité (14) peut être déplacé par l'élément d'application (50) qui est conçu sous forme de microbrosse (50) et peut être enfoncé en particulier dans le boîtier (12) en surmontant sa fonction d'étanchéité.

12. Dispositif applicateur selon l'une quelconque des revendications 10 ou 11,
**caractérisé en ce que** la fonction d'étanchéité du dispositif d'étanchéité (14) est formée entre un renflement en saillie (24) au niveau du côté interne du boîtier (12) et le côté externe du dispositif d'étanchéité (14).

13. Dispositif applicateur selon l'une quelconque des revendications 10 à 12,
**caractérisé en ce que** le dispositif d'étanchéité (14) présente au moins un évidement latéral (28, 30), par le biais duquel l'élément d'application (50) peut être mouillé par le fluide (20) après son enfoncement.

14. Dispositif applicateur selon l'une quelconque des revendications 10 à 13,
**caractérisé en ce que** l'élément d'application (50) présente une pointe émoussée (54), par le biais de laquelle le dispositif d'étanchéité (14) essentiellement en forme de bécher peut être enfoncé par appui sur le fond du bécher (26).

15. Dispositif applicateur selon l'une quelconque des revendications précédentes,
**caractérisé en ce que** l'élément d'application est conçu sous forme de microbrosse (50), dont la pointe de brosse émoussée (54) est floconnée de poils de brosse (52), qui sont aplatis par la pression entre le fond du bécher (26) et la microbrosse (50) et se dressent automatiquement lors de l'extraction de la microbrosse (50) du dispositif d'étanchéité (14).

16. Dispositif applicateur selon l'une quelconque des revendications 10 à 15,
**caractérisé en ce que** le dispositif d'étanchéité (14) présente à son extrémité supérieure une saillie de guidage (40), qui s'étend de manière circulaire et dont le diamètre extérieur correspond essentiellement au diamètre intérieur du boîtier (12).

17. Dispositif applicateur selon l'une quelconque des revendications 10 à 16,
**caractérisé en ce que** l'élément d'application (50) est conduit de manière latérale dans le dispositif d'étanchéité (14) et que le diamètre de la tige (44) est adapté au diamètre intérieur du dispositif d'étanchéité (14) en forme de bécher.

18. Dispositif applicateur selon l'une quelconque des revendications 7 à 17,
**caractérisé en ce que** le boîtier (12) reçoit le dispositif applicateur (10) à la manière d'une unité à une seule dose.

19. Dispositif applicateur selon l'une quelconque des revendications 10 à 18,
**caractérisé en ce que** le dispositif d'étanchéité (14) présente un fond en forme de disque (26) et un anneau (38) à son extrémité opposée, qui sont reliés l'un à l'autre avec au moins deux, en particulier avec exactement deux, entretoises (32, 34).

20. Dispositif applicateur selon l'une quelconque des revendications 10 à 19,
**caractérisé en ce que** l'élément d'application (50) couvre essentiellement une surface, qui correspond à la surface interne du dispositif d'étanchéité (14).

21. Dispositif applicateur selon l'une quelconque des revendications précédentes,
**caractérisé en ce que** l'élément d'application (50) est conçu comme une microéponge souple.

22. Dispositif applicateur selon l'une quelconque des revendications précédentes,
**caractérisé en ce que** l'élément applicateur (16) présente sur l'étendue de sa tige une encoche (60), par le biais de laquelle la tige (44) de l'élément applicateur (16) peut se courber.

23. Dispositif applicateur selon l'une quelconque des revendications précédentes,
**caractérisé en ce que** un épaississement (58) dont le diamètre est supérieur au diamètre intérieur de l'anneau (38) est formé entre la tige (44) et la poignée (42) de l'élément applicateur (16).

24. Dispositif applicateur selon la revendication 23,
**caractérisé en ce que** la longueur de l'élément applicateur (16) entre l'épaississement (58) et l'élément d'application (50) correspond essentiellement à la longueur du dispositif d'étanchéité (14) entre l'extrémité supérieure de l'anneau (38) et le côté supérieur du fond (26) et est en particulier un peu plus grande que la longueur correspondante de l'élément applicateur (16).

25. Dispositif applicateur selon l'une quelconque des revendications 10 à 24,
**caractérisé en ce que** l'élément applicateur (16) est reçu de façon comprimée dans le dispositif d'étanchéité (14) et qu'en particulier les poils de brosse (52) de la microbrosse (50) arrivent jusqu'à l'entretoise (32, 34) du dispositif d'étanchéité (14).

26. Procédé de fabrication d'une substance à appliquer sur une surface dentaire, dans lequel la substance est préfabriquée dans un dispositif applicateur présentant un élément d'application (50) et dans lequel l'élément d'application présente une extrémité de poignée et une extrémité de travail,
**caractérisé en ce que** l'élément d'application (50) est constitué à une extrémité d'application d'un matériau déformable, sur lequel au moins une substance réactive est appliquée en amont,
- la substance réactive se trouvant sous forme solide ou semi-solide sur l'élément d'application (50),
- l'extrémité d'application étant introduite dans un dispositif d'étanchéité (14) du dispositif applicateur, et
- l'extrémité d'application de l'élément d'application (50) étant plongée dans un fluide, qui entoure l'extrémité d'application en formant une goutte, situé dans un dispositif de réception (18) du dispositif applicateur, la substance réactive étant activée par le fluide, qui présente une faible viscosité et la substance appliquée de telle manière sur l'extrémité d'application de l'élément d'application pouvant être appliquée sur une surface dentaire.
